# EUROPEAN PATENT SPECIFICATION

(11) **EP 2 973 903 B1**
(45) Date of publication and mention of the grant of the patent: **23.10.2019**
(21) Application number: 13877652.1
(22) Date of filing: 15.03.2013
(51) Int. Cl.: H02B 13/025

(54) **ELECTRICAL ASSEMBLY COMPRISING AN ARC RESISTANT PRESSURE DAMPER PANEL**
ELEKTRSICHE BAUGRUPPE MIT EINER LICHTBOGENFESTE DRUCKDÄMPFERPLATTE
ENSEMBLE ÉLECTRIQUE AVEC PANNEAU AMORTISSEUR DE PRESSION RÉSISTANT À L'ARC

(43) Date of publication of application: 20.01.2016
(73) Proprietor: Schneider Electric USA, Inc., Andover, MA 01810 (US)
(72) Inventor: MOTLEY, Gregory, O., Andover, MA 01810 (US); JORDAN, Jeffrey, T., Andover, MA 01810 (US)
(74) Representative: Murgitroyd & Company
(86) International application number: PCT/US2013/031884
(87) International publication number: WO 2014/142942

(56) References cited:
- WO-A1-02/075884
- WO-A1-02/075885
- WO-A2-2011/156243
- US-A1- 2003 117 045
- US-A1- 2010 219 161
- US-A1- 2011 259 852
- US-B1- 7 952 857
- US-B2- 6 670 872

## Description

### FIELD OF THE INVENTION

This invention is directed generally to electrical systems, and, more particularly, to a damper panel for protecting an arc-resistant enclosure during an arc event.

### BACKGROUND OF THE INVENTION

Arc-resistant switchgear enclosures are designed to withstand the effects of an internal arc event. Such an event typically causes an explosive reaction that results in a violent pressure wave traveling in the enclosure towards an exhaust outlet and causing severe mechanical and thermal stress on the structural components of the enclosure. If enclosure parts were to fail during the arc event, inadvertent escape of pressure and arc product would result, which, in turn, would cause the slowing down of pressure relief through the exhaust outlet and would lead to failure of the enclosure.

One problem with existing enclosures occurs at a roof panel that is located in the path of the pressure wave, before the exhaust outlet. The roof panel is an external component that diverts arc products toward the exhaust during an arc event. As such, the roof panel typically absorbs the brunt of the pressure and deforms such that inadvertent escape of the arc product occurs through holes or kinks in the roof panel or adjacent connections. To meet safety standards, structural integrity is required such that accidental blow-out of the pressure wave through or near the roof panel is prevented. For example, industry standards require that indicators placed at certain positions relative to the enclosure do not burn during a test as a result of escaping arc products. IEEE Standard C37.20.7, Paragraph 5.4.2, *Indicator Placement.* This requirement creates a significant design challenge for existing enclosures.

To comply with the industry standards, existing enclosures are reinforced with added structural components and strengthening materials to restrict the deformation of the flanged connection. For example, existing enclosures are designed with strong, heavy gauge steel materials that can withstand a peak pressure of the arc event (e.g., a peak pressure that develops in the first 10 milliseconds ("ms") of an arc event). A heavy gauge enclosure further requires multiple fasteners for assembly of the enclosure. However, this type of enclosure is disadvantageous at least because they require added material cost, increased assembly time, and they risk allowing the peak pressure to reach external materials (e.g., the roof panel) of the enclosure. WO02/075884 shows a prior art arc-resistant enclosure.

What is needed is an arc-resistant enclosure with a damper panel that absorbs and dampens the peak pressure on the roof panel during an arc event.

### SUMMARY OF THE INVENTION

The invention is defined by claim 1. According to the present invention, an electrical enclosure houses electrical distribution devices, including a circuit breaker, and protects users and nearby equipment from devastating effects of arc events (*e.g.,* fire and explosions). The electrical enclosure is intended to house medium or high voltage switchgear equipment that is typically in the range of about 600-34,000 volts.

The electrical enclosure has at least one section that creates an exhaust path from the circuit breaker to an exhaust outlet. A first part of the exhaust path is generally vertical and extends between the circuit breaker and a damper panel. The damper panel is mounted below a roof panel such that an air pocket is created between the two panels. A second part of the exhaust path is generally perpendicular to the first part, extending between an edge of the roof panel and the exhaust outlet to the exterior.

When an arc event occurs, a pressure wave is created that travels from the circuit breaker towards the damper panel and, then, is redirected towards the exhaust outlet. The damper panel elastically deforms, absorbing the majority of the pressure, and causes the pressure wave to seek the path of least resistance towards the exhaust outlet. Although the damper panel may subsequently deform plastically, a dampened pressure wave is transmitted to the roof panel, and the peak pressure wave does not escape through any unintended paths. As such, the damper panel protects the roof panel from severe damage, prevents the pressure wave from creating cracks or leaks that would allow unintended escape of flames or fumes, or superheated gases, and redirects the pressure wave to safely exit the electrical enclosure through the exhaust outlet. According to one example, the damper panel absorbs nearly two thirds of the pressure force, with the roof panel receiving only about a third of the total pressure force.

One benefit of the damper panel configuration is that it reduces the material required for forming a roof panel with sufficient structural integrity to withstand the total pressure force. For example, instead of designing a roof panel that would withstand a force of Kg 2,903 (6,400 pounds) of force, the roof panel (with a damper panel) would only have to withstand a force of Kg 1,043 (2,300 pounds) of force. As such, manufacturing costs are greatly reduced.

The damper panel is unconventional with respect to existing enclosure configurations at least because it acts to dampen the force on components of the electrical enclosure, instead of attempting to rigidly resist the force. The dampening provides an internal barrier to the components, such as the roof panel, and increases the likelihood of withstanding the tremendous explosion of force.

According to the present invention, an electrical assembly includes an exhaust outlet, a plurality of panels, an exhaust path, and a damper panel. The panels include a roof panel and define an enclosure section configured to enclose an electrical distribution device. The exhaust path originates at the electrical distribution device and ends at the exhaust outlet, the exhaust path providing an exhaust route for a pressure wave caused by an arc event at the electrical distribution device. The pressure wave initially travels in a first direction towards the roof panel and subsequently in a second direction towards the exhaust outlet. The damper panel is mounted inside the enclosure section to the roof panel and is separated from the roof panel by an air pocket. The damper panel redirects the pressure wave to change directions from the first direction to the second direction.

According to the present invention, an arc-resistant enclosure includes an exhaust outlet and an enclosure section defined by a plurality of panels, which includes a top panel and is configured to enclose an electrical distribution device. An exhaust path, from the electrical distribution device to the exhaust outlet, has a vertical section between the electrical distribution device and the top panel and a horizontal section between the top panel and the exhaust outlet. A damper panel is mounted underneath and is separated by an air pocket from the top panel, the damper panel deflecting a pressure wave resulting from an arc event at the electrical distribution device. The deflecting causes a change in direction of the pressure wave from a vertical direction, in the vertical section, to a horizontal direction, in the horizontal section. The damper panel deforms during the deflecting of the pressure wave.

The foregoing and additional aspects and embodiments of the present invention will be apparent to those of ordinary skill in the art in view of the detailed description of various embodiments and/or aspects, which is made with reference to the drawings, a brief description of which is provided next.

### BRIEF DESCRIPTION OF THE DRAWINGS

The invention may best be understood by reference to the following description taken in conjunction with the accompanying drawings.
FIG. 1 is a perspective view of an electrical assembly.
FIG. 2 is a perspective view of a damper panel for the electrical assembly of FIG. 1.
FIG. 3 is an elevation view illustrating the internal exhaust path within an electrical enclosure assembly during an arc event.
FIG. 4 is a diagram illustrating the exhaust path inside the electrical enclosure assembly prior to a peak pressure of a pressure wave during the arc event.
FIG. 5 is a diagram illustrating the exhaust path and effect on the damper panel of FIG. 4 during the peak pressure of the pressure wave.
FIG. 6 is a diagram illustrating the exhaust path and effect on the damper panel of FIG. 4 after the peak pressure of the pressure wave.
FIG. 7 is a graph illustrating the resulting pressure changes in relation to time during an arc event.
FIG. 8A shows data with input parameters for determining effectiveness of a damper panel during an arc fault event.
FIG. 8B shows data with input parameters for determining contribution of an air pocket to dampening of a peak pressure during an arc fault event.

### DETAILED DESCRIPTION OF THE ILLUSTRATED EMBODIMENTS

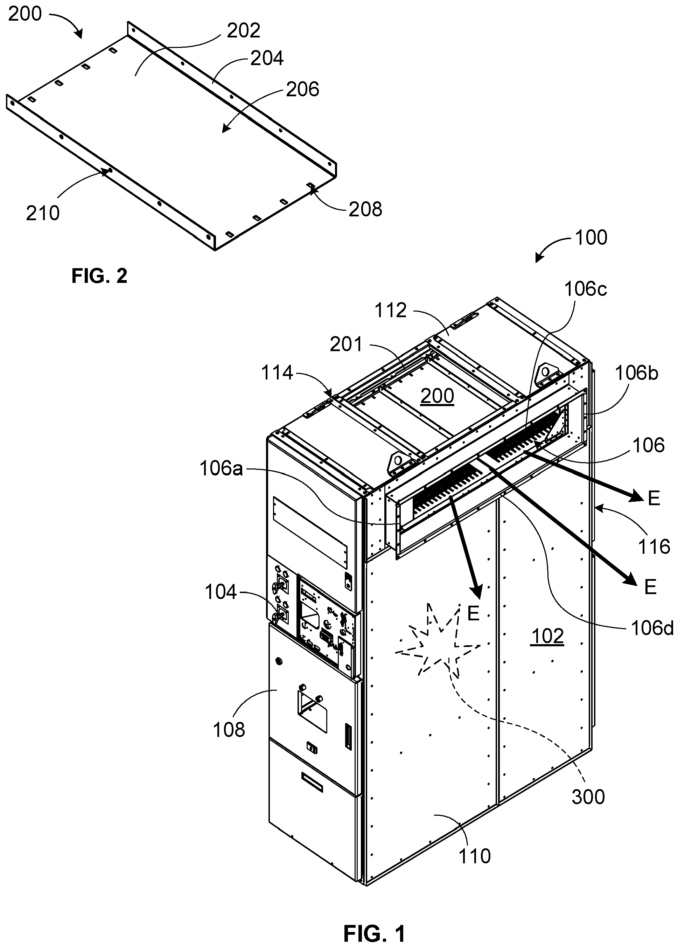

Referring to FIG. 1, an electrical assembly 100 for a switchgear, or other electrical equipment, includes an enclosure 102 (or cabinet), a circuit breaker 104, and an exhaust outlet 106. The enclosure 102 provides outermost enclosure surfaces between an internal space and the exterior environment. Specifically, the enclosure 102 is formed by a plurality of front panels 108, right panels 110, top panels 112, left panels 114, and back panels 116. The top panels 112 include a front top panel 112a and a back top panel 112b and are also referred to as roof panels. The top panels 112 further include a central top panel that has been removed for illustration purposes.

The electrical assembly 100 typically includes one or more enclosure sections, each section likely to have an arc event and having its own exhaust path. For example, an enclosure section can be dedicated to housing an electrical distribution device, another enclosure section can be dedicated to housing a bus bar, and another section can be dedicated to housing electrical cables. The enclosure 102 described below is applicable to any type of enclosure section.

The exhaust outlet 106 is a rectangular aperture located along a top portion of the right panels 110, with left and right edges 106a, 106b near respective ones of the front and back panels 108, 116. The exhaust outlet 106 further has a top edge 106c near and parallel to the top panels 112 and a bottom edge 106d that is parallel to the top edge. Exhaust E caused by an arc event 300, which occurs within the internal space, exits the enclosure 102 through the exhaust outlet 106. The exhaust E makes contact with a damper panel 200, which is mounted below at least one of the top panels 112.

Referring to FIG. 2, the damper panel 200 is configured for attachment to the structural frame of the enclosure 102. The damper panel 200 has a main surface 202 and two side walls 204 extending perpendicularly along edges of the main surface 202 to form an internal space 206 (when assembled to the top panel 112). The main surface 202 includes fastening holes 208 for attachment to mounting brackets 201 (one bracket shown in FIG. 1) that are connected to the structural frame of the enclosure, and the side walls 204 include fastening holes 210 for attachment to adjacent damper panels. In this manner, the damper panel 200 is positioned directly under the central top panel, while adjacent damper panels are positioned, respectively, under the front and back top panels 112a, 112b.

The damper panel 200 is positioned under the top panel 112 such that an air pocket 302 separates the main surface 202 from the top panel 112. In this example, the main surface 202 is parallel to and offset from the top panel 112 at a distance X that allows the damper and roof panels to move independently of one another.

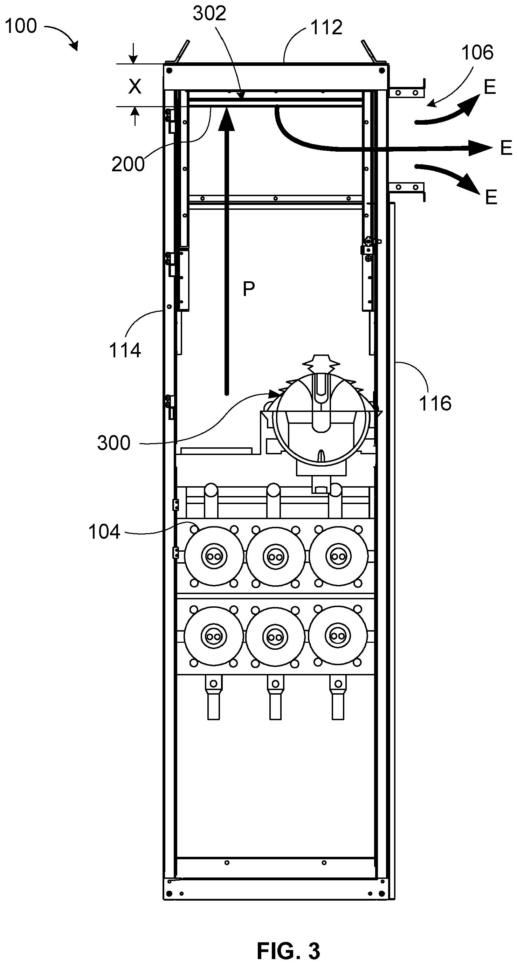

Referring to FIG. 3, the circuit breaker 104 is an electrical distribution device at which the arc event may originate near the point of arc 300. The arc event causes a pressure wave that travels initially in a first direction P towards the top panels 112 and, then, upon contact with the damper panel 200, is redirected in a second direction E towards the exhaust outlet 106. The damper panel 200 is separated from the respective top panel 112 by an air pocket 302 at a distance X, which according to one example is cm 9.65 (3.8 inches).

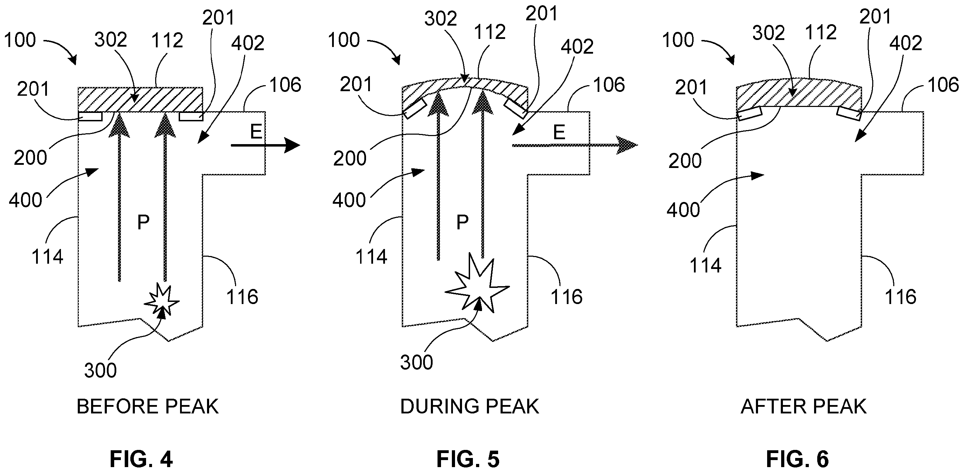

Referring to FIGs. 4-6, a time sequence is illustrated showing the effects of the pressure wave on the damper panel 200 and the top panel 112 prior to, during, and after a peak pressure of the pressure wave. In FIG. 4, the enclosure assembly 100 is illustrated prior to the peak pressure making contact with the damper panel 200, with the peak pressure traveling initially in the first direction P through a vertical section 400 of the exhaust path between the point of arc 300 towards the damper panel 200. The time frame of the arc event prior to the peak pressure is typically between 0-10 ms. The pressure build-up is negligible during this time frame, with some pressure exhausting in a second direction E through the exhaust outlet 106 and with no evident deformation to the damper panel 200, the bracket 201, or the top panel 112. The second direction E of the pressure is along a horizontal section 402 of the exhaust path between the damper panel 200 and the exhaust outlet 106.

In FIG. 5, the enclosure assembly 100 is illustrated when the peak pressure makes contact with the damper panel 200 and is redirected from the first direction P to the second direction E. The time frame of the arc event during the peak pressure is typically between 10-100 ms. As a result of the arc event, an extreme blast of pressure severely blasts the damper panel 200, which naturally deforms, and slightly compresses the air pocket 302. The elasticity of the steel damper panel works to resist the force applied by the peak pressure. This resistance allows the vertical blast of pressure, in the first direction P, to change directions and exhaust from the enclosure assembly 100 in the second direction E through the exhaust outlet 106.

In FIG. 6, the enclosure assembly 100 is illustrated when the peak pressure has completely exited through the exhaust outlet 106. The time frame of the arc event after the peak pressure is typically between 100-200 ms. At this point in time, the pressure has extinguished. Although deformation to the top panel 112 and to the brackets 201 is evident, the damper panel 200 remains intact. The damper panel 200 compresses the air pocket 302 with a sufficient displacement to deform the top panel 112 (e.g., a displacement of about cm 1.27 (0.5 inches))

The elastic deformation of the damper panel 200 refers to temporary deformation during the arc event, after which the damper panel 200 springs back to its original shape. In other words, the damper panel 200 returns to its original shape when the applied pressure is no longer applied (e.g., pressure wave dissipates).

The plastic deformation of the damper panel brackets 201 at the structural frame and the plastic deformation of the top panel 112 refers to permanent deformation, during and after the arc event. In other words, this deformation is irreversible at least in part. As such, the top panel 112 may return part way to its original shape (but not the top panel 112 and/or the brackets 201).

Accordingly, the damper panel 200 acts to mechanically dampen the initially pressure inside the enclosure assembly 100 by deforming the top panel 112 plastically. The elastic crushing motion of the damper panel 200 dampens the pressure by temporarily absorbing the peak pressure impulse and, then, transmits a reduced pressure impulse to the top panel 112. The dampening allows the pressure to seek the next path of least resistance, which is the exhaust outlet 106.

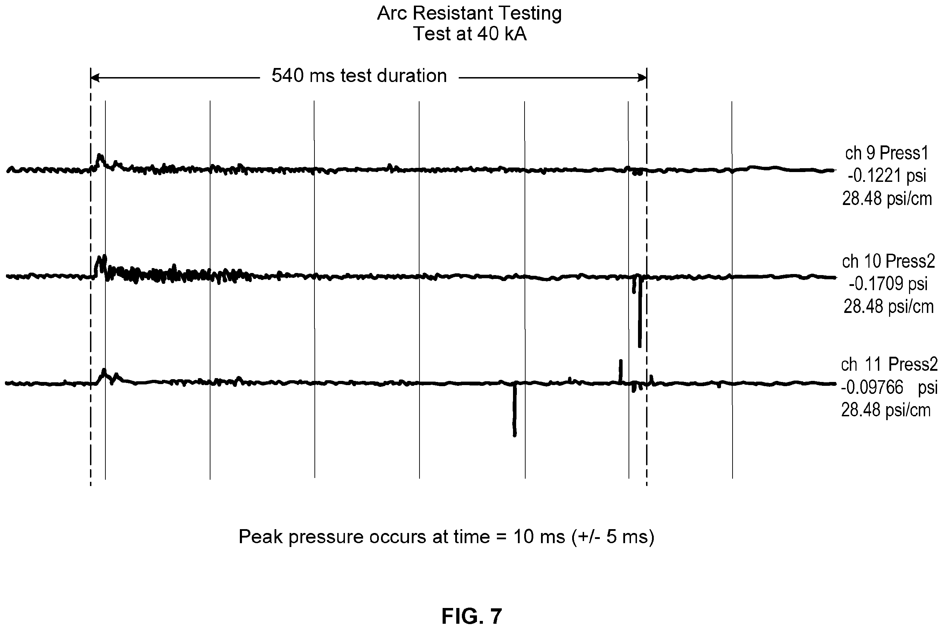

Referring to FIG. 7, a chart illustrates a mock-up arc-resistant test for a damper panel mounted to a roof panel of an electrical enclosure. To simulate the test as it relates to operator safety, cotton indicators were placed around the enclosure during the arc resistance testing. For example, in accordance with IEEE Standard C37.20.7, Paragraph 5.4.2, *Indicator Placement,* horizontal indicators were located beginning at vertical indicators extending 800 millimeters (31 inches) away from vertical sides of the electrical enclosure. The indicators did not extend past the exhaust outlet. The test, which was performed at 40 kilo Amperes (kA), was successful. For example, none of the cotton indicators burned during the test as a result of escaping arc products.

The test also showed an adequately sized and efficient exhaust that quickly reduced the peak pressure inside the enclosure. Thus, instead of having a strong heavy gauge steel enclosure with multiple fasteners (as used in existing enclosures), the test was evidence that the damper panel of the present invention is successful in withstanding the effects of an arc event. By way of example, typical existing enclosures use heavy 11 gauge steel (which has a thickness of about cm 0.295 (0.116 inch)). In contrast, the damper panel is made from a much lighter material, such as 14 gauge steel (which has a thickness of about cm 0.188 (0.074 inch)).

More specifically, FIG. 7 shows a time plot of pressures sensed at different locations in the enclosure. For example, the highest pressure was sensed at an intermediate location (e.g., near the damper panel), with a reduced pressure being sensed at a higher location (e.g., near the roof panel). Of note, the damper panel acts during the first 10 milliseconds of the tested arc event to quickly and efficiently prevent the escape of harmful particles and gases, and to aide in the exhaust performance.

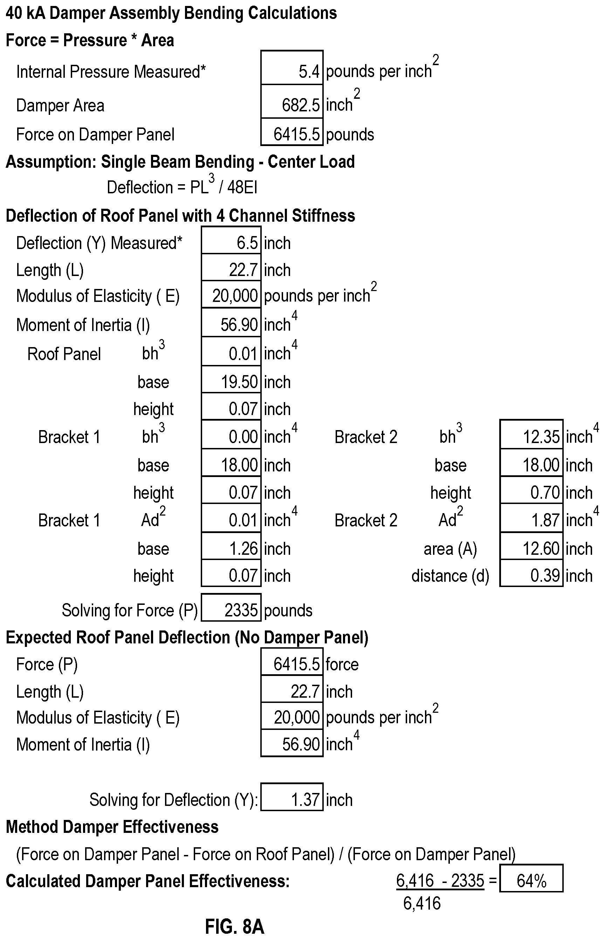

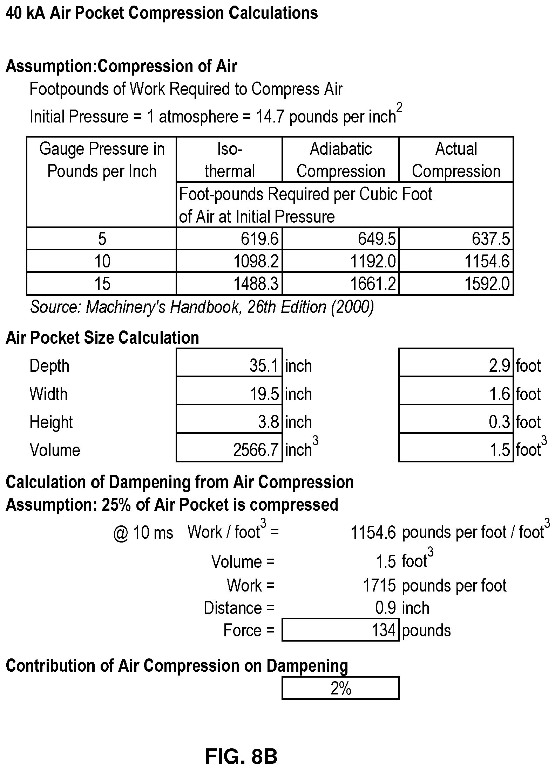

Referring to FIGs. 8A and 8B, data is provided with input parameters for determining effectiveness of a damper panel (FIG. 8A) and the contribution of air compression on the dampening (FIG. 8B). In FIG. 8A the data shows that the damper panel can reduce the pressure in a roof panel during an arc event by at least 64%. In this example, the measured percentage effectiveness is determined by subtracting the force on the roof panel (Kg 1,059 (2,335 pounds)) from the force on the damper panel (Kg 2,910 (6,416 pounds)) and, then, dividing the result by the force on the damper panel (Kg 2,910 (6,416 pounds)). In FIG. 8B the data further shows that the air pocket between the damper panel and the roof panel contributes 2% to the reduction in force.

According to this example, the damper panel is made from a sheet metal of 14 gauge light steel, which is stiffer than the roof panel, and is fastened laterally to a frame via brackets that are also made of 14 gauge light steel. The fasteners are lightweight fasteners, such as M5 or M6 screws. The moment of inertia of the enclosure is about cm⁴ 2372.51 (57 in⁴), which is significantly higher than the moment of inertia of the roof panel. The damper panel is beneficial at least because it temporarily absorbs the peak pressure and it transmits a reduced pressure to the roof panel, acting as an internal sacrificial roof. Thus, the damper panel reduces shock to the roof panel, it greatly reduces the peak force on the roof panel (e.g., by 64%), it acts quickly (e.g., within 10 milliseconds of arc initiation), and it springs back to its shape after the arc event terminates exhibiting permanent deformation only at the mounting brackets fastened to the structural frame.

While particular embodiments, aspects, and applications of the present invention have been illustrated and described, it is to be understood that the invention is not limited to the precise construction and compositions disclosed herein and that various modifications, changes, and variations may be apparent from the foregoing descriptions without departing from the scope of the invention as defined in the appended claims.

## Claims

1. An electrical assembly (100) comprising:
an exhaust outlet (106);
a plurality of panels (108, 110, 112, 114, 116) defining an enclosure section (102) and configured to enclose an electrical distribution device, the plurality of panels including a roof panel (112); and
an exhaust path originating at the electrical distribution device and ending at the exhaust outlet (106), the exhaust path providing an exhaust route for a pressure wave caused by an arc event at the electrical distribution device, the pressure wave initially traveling in a first generally vertical upwards direction towards the roof panel and subsequently in a second generally horizontal direction towards the exhaust outlet (106); the electrical assembly further comprising and **characterized by**:
a damper panel (200) mounted inside the enclosure section underneath the roof panel (112), the damper panel (200) being separated from the roof panel (112) by an air pocket, the damper panel (200) configured to redirect the pressure wave to change directions from the first generally vertical upwards direction to the second generally horizontal direction, wherein the damper panel (200) is adapted to elastically deform responsive to peak pressure of the pressure wave and the roof panel (112) is adapted to plastically deform responsive to peak pressure of the pressure wave.

2. The electrical assembly of claim 1, wherein the electrical distribution device is a medium voltage or a high voltage device, and/or wherein the electrical distribution device is a circuit breaker.

3. The electrical assembly of claim 1, wherein the plurality of panels includes a front panel (108) parallel to a back panel (116) and attached along a left edge to a left panel (114) and along a right edge to a right panel (110), the roof panel (112) being attached to upper edges of each of the front panel, the back panel, the left panel, and the right panel.

4. The electrical assembly of claim1, wherein an angular change between the first direction and the second direction is 90 degrees.

5. The electrical assembly of claim 1, wherein the damper panel (200) is mounted to mounting brackets (201) that are connected to a structural frame of the enclosure section (102), the mounting brackets (201) are adapted to plastically deform responsive to peak pressure of the pressure wave.

6. The electrical assembly of claim 1, wherein the damper panel (200) is adapted to reduce peak pressure of the pressure wave on the roof panel (112) by approximately 60%.

7. The electrical assembly of claim 1, wherein the damper panel (200) is a sheet metal of 14 gauge steel.

8. An arc-resistant enclosure comprising the electrical assembly (100) of claim 1.

## Patentansprüche

1. Eine elektrische Anordnung (100), die Folgendes beinhaltet:
einen Abgasauslass (106);
eine Vielzahl von Platten (108, 110, 112, 114, 116), die einen Gehäuseabschnitt (102) definieren und dazu konfiguriert sind, eine elektrische Verteilervorrichtung einzuschließen, wobei die Vielzahl von Platten eine Dachplatte (112) umfasst; und
eine Abgasstrecke, die von der elektrischen Verteilervorrichtung ausgeht und an dem Abgasauslass (106) endet, wobei die Abgasstrecke einen Abgasweg für eine von einem Lichtbogenereignis an der elektrischen Verteilervorrichtung verursachte Druckwelle bereitstellt, wobei sich die Druckwelle anfänglich in einer ersten, allgemein vertikalen Richtung nach oben auf die Dachplatte zu bewegt und anschließend in einer zweiten, allgemein horizontalen Richtung auf den Abgasauslass (106) zu; wobei die elektrische Anordnung ferner Folgendes umfasst und **gekennzeichnet ist durch**:
eine Dämpferplatte (200), die in dem Gehäuseabschnitt unter der Dachplatte (112) befestigt ist, wobei die Dämpferplatte (200) **durch** einen Lufteinschluss von der Dachplatte (112) getrennt ist, wobei die Dämpferplatte (200) dazu konfiguriert ist, die Druckwelle umzulenken, um die Richtung von der ersten, allgemein vertikalen Richtung nach oben zu der zweiten, allgemein horizontalen Richtung zu ändern, wobei die Dämpferplatte (200) dazu angepasst ist, sich als Reaktion auf einen Spitzendruck der Druckwelle elastisch zu verformen, und die Dachplatte (112) dazu angepasst ist, sich als Reaktion auf einen Spitzendruck der Druckwelle plastisch zu verformen.

2. Elektrische Anordnung gemäß Anspruch 1, wobei es sich bei der elektrischen Verteilervorrichtung um eine Mittelspannungs- oder Hochspannungsvorrichtung handelt, und/oder wobei es sich bei der elektrischen Verteilervorrichtung um einen Trennschalter handelt.

3. Elektrische Anordnung gemäß Anspruch 1, wobei die Vielzahl von Platten eine vordere Platte (108), die zu einer hinteren Platte (116) parallel ist und entlang eines linken Rands an einer linken Platte (114) und entlang eines rechten Rands an einer rechten Platte (110) angebracht ist, beinhaltet, wobei die Dachplatte (112) jeweils an dem oberen Rand der vorderen Platte, der hinteren Platte, der linken Platte und der rechten Platte angebracht ist.

4. Elektrische Anordnung gemäß Anspruch 1, wobei eine Winkeländerung zwischen der ersten Richtung und der zweiten Richtung 90 Grad beträgt.

5. Elektrische Anordnung gemäß Anspruch 1, wobei die Dämpferplatte (200) an Befestigungshalterungen (201) befestigt ist, die mit einem Tragrahmen des Gehäuseabschnitts (102) verbunden sind, wobei die Befestigungshalterungen (201) dazu angepasst sind, sich als Reaktion auf einen Spitzendruck der Druckwelle plastisch zu verformen, und die Dämpferplatte (200) dazu angepasst ist, sich als Reaktion auf einen Spitzendruck der Druckwelle an den Befestigungshalterungen (201) plastisch zu verformen.

6. Elektrische Anordnung gemäß Anspruch 1, wobei die Dämpferplatte (200) dazu angepasst ist, den Spitzendruck der Druckwelle auf die Dachplatte (112) um ungefähr 60 % zu verringern.

7. Elektrische Anordnung gemäß Anspruch 1, wobei es sich bei der Dämpferplatte (200) um ein Metallblech aus 14-Gauge-Stahl handelt.

8. Ein lichtbogenfestes Gehäuse, das die elektrische Anordnung (100) gemäß Anspruch 1 beinhaltet.

## Revendications

1. Un ensemble électrique (100) comprenant :
une sortie d'échappement (106) ;
une pluralité de panneaux (108, 110, 112, 114, 116) définissant une section d'enceinte (102) et configurée pour renfermer un dispositif de distribution électrique, la pluralité de panneaux incluant un panneau de toit (112) ; et
un trajet d'échappement commençant au niveau du dispositif de distribution électrique et se terminant au niveau de la sortie d'échappement (106), le trajet d'échappement fournissant un itinéraire d'échappement pour une onde de pression provoquée par un événement d'arc au niveau du dispositif de distribution électrique, l'onde de pression se déplaçant initialement dans une première direction généralement verticale vers le haut vers le panneau de toit et ensuite dans une deuxième direction généralement horizontale vers la sortie d'échappement (106) ; l'ensemble électrique comprenant en outre et étant **caractérisé par** :
un panneau amortisseur (200) monté à l'intérieur de la section d'enceinte sous le panneau de toit (112), le panneau amortisseur (200) étant séparé du panneau de toit (112) par une poche d'air, le panneau amortisseur (200) étant configuré pour rediriger l'onde de pression afin de changer des directions de la première direction généralement verticale vers le haut à la deuxième direction généralement horizontale, le panneau amortisseur (200) étant conçu pour se déformer élastiquement en réponse à une pointe de pression de l'onde de pression et le panneau de toit (112) étant conçu pour se déformer plastiquement en réponse à une pointe de pression de l'onde de pression.

2. L'ensemble électrique de la revendication 1, dans lequel le dispositif de distribution électrique est un dispositif moyenne tension ou un dispositif haute tension, et/ou dans lequel le dispositif de distribution électrique est un disjoncteur.

3. L'ensemble électrique de la revendication 1, dans lequel la pluralité de panneaux inclut un panneau avant (108) parallèle à un panneau arrière (116) et attaché le long d'un bord gauche à un panneau gauche (114) et le long d'un bord droit à un panneau droit (110), le panneau de toit (112) étant attaché à des bords supérieurs de chaque panneau parmi le panneau avant, le panneau arrière, le panneau gauche et le panneau droit.

4. L'ensemble électrique de la revendication 1, dans lequel un changement angulaire entre la première direction et la deuxième direction est de 90 degrés.

5. L'ensemble électrique de la revendication 1, dans lequel le panneau amortisseur (200) est monté sur des supports de montage (201) qui sont raccordés à un cadre structural de la section d'enceinte (102), les supports de montage (201) étant conçus pour se déformer plastiquement en réponse à une pointe de pression de l'onde de pression, et le panneau amortisseur (200) est conçu pour se déformer plastiquement au niveau des supports de montage (201) en réponse à une pointe de pression de l'onde de pression.

6. L'ensemble électrique de la revendication 1, dans lequel le panneau amortisseur (200) est conçu pour réduire une pointe de pression de l'onde de pression sur le panneau de toit (112) d'approximativement 60 %.

7. L'ensemble électrique de la revendication 1, dans lequel le panneau amortisseur (200) est une tôle d'acier de calibre 14.

8. Une enceinte résistante à un arc comprenant l'ensemble électrique (100) de la revendication 1.
